# EUROPÄISCHE PATENTANMELDUNG

(11) **EP 3 974 119 A1**
(43) Veröffentlichungstag der Anmeldung: **30.03.2022**
(21) Anmeldenummer: 20197837.6
(22) Anmeldetag: 23.09.2020
(51) Int. Cl.: B25J 9/00, B25J 9/02, B25J 9/04, B25J 15/00, B25J 15/02, B25J 17/02, B25J 19/02, H01R 43/26, H02G 3/32

(54) **VORRICHTUNG ZUM AUTOMATISIERTEN HERSTELLEN EINER STECKVERBINDUNG**

(71) Anmelder: Liebherr-Verzahntechnik GmbH, 87437 Kempten (DE)
(72) Erfinder: Pollmann, Jan, 87439 Kempten (DE); Hiemer, Lukas, 87452 Altusried (DE)
(74) Vertreter: Behr, Wolfgang

(57) **Zusammenfassung**

Die vorliegende Erfindung zeigt eine Vorrichtung zum automatisierten Herstellen einer Steckverbindung eines an einem Kabel angeordneten Steckers mit einem Stecker-Gegenelement, insbesondere zur Verkabelung von Batterie-Modulen, insbesondere bei der Herstellung von Fahrzeugen mit Hybrid- und/oder Elektroantrieb, umfassend: einen Greifer zum Greifen des Steckers, eine Handling-Einheit mit mehreren Achsen zum Bewegen des Greifers, wobei es sich insbesondere um einen Mehr-Achs-Roboter und/oder ein Flächenportal handelt, und eine Steuerung zur Ansteuerung des Greifers und der Handling-Einheit. Dabei ist vorgesehen, dass der Greifer einen Steckaktor zum Bewegen des Steckers in eine gesteckte Position mit dem Stecker-Gegenelement umfasst.

## Beschreibung

Die vorliegende Erfindung betrifft eine Vorrichtung zum automatisierten Herstellen einer Steckverbindung eines an einem Kabel angeordneten Steckers mit einem Stecker-Gegenelement sowie einen Greifer, welcher in einer solchen Vorrichtung zum Einsatz kommen kann.

Druckschrift DE 10 2017 217601 A1 zeigt ein Verfahren zum Einstecken eines elektrischen Steckers mittels eines an einem Roboter angeordneten Greifers. Dabei wird der Stecker zunächst an die Steckbuchse herangefahren, so dass er diese mechanisch berührt, und die zutreffende Steckposition durch eine Suchbewegung des Steckers in einer quer zur Steckrichtung stehenden Suchebene ermittelt. Aufgrund der mechanischen Belastung von Stecker und Steckbuchse ist diese Lösung jedoch nur für spezielle Stecker und Steckbuchsen überhaupt möglich. Zudem ist sie zeitraubend und aufwändig.

Aus Druckschrift US 2015/0210174 A1 ist eine Ladestation zum Aufladen von elektrisch betriebenen Autos bekannt, bei welcher der Stecker des Ladekabels mittels eines Roboters automatisch mit der Ladebuchse verbunden wird.

Aufgabe der vorliegenden Erfindung ist es, eine verbesserte Vorrichtung zum automatisierten Herstellen einer Steckverbindung eines an einem Kabel angeordneten Steckers mit einem Stecker-Gegenelement Verfügung zu stellen.

Diese Aufgabe wird durch eine Vorrichtung gemäß Anspruch 1 gelöst. Bevorzugte Ausgestaltungen der vorliegenden Erfindung sind Gegenstand der Unteransprüche.

Die vorliegende Erfindung umfasst in einem ersten Aspekt eine Vorrichtung zum automatisierten Herstellen einer Steckverbindung eines an einem Kabel angeordneten Steckers mit einem Stecker-Gegenelement, umfassend einen Greifer zum Greifen des Steckers, eine Handling-Einheit mit mehreren Achsen zum Bewegen des Greifers und eine Steuerung zur Ansteuerung des Greifers und der Handling-Einheit. Dabei ist vorgesehen, dass der Greifer einen Steckaktor zum Bewegen des Steckers in eine gesteckte Position mit dem Stecker-Gegenelement umfasst.

Der Steckaktor erlaubt ein einfacheres und zuverlässigeres Fügen der Steckverbindung, als dies durch die Handling-Einheit allein möglich wäre.

Bei der Handling-Einheit handelt es sich insbesondere um einen Mehr-Achs-Roboter und/oder ein Flächenportal.

Die erfindungsgemäße Vorrichtung ist insbesondere eine Vorrichtung zur automatisierten Verkabelung von Batterie-Modulen, insbesondere bei der Herstellung von Fahrzeugen mit Hybrid- und/oder Elektroantrieb.

Die Steuerung der erfindungsgemäßen Vorrichtung ist bevorzugt so programmiert, dass die im folgenden beschriebenen Verfahren zum Herstellen einer Steckverbindung eines Steckers mit einem Stecker-Gegenelement automatisiert durchgeführt werden. Soweit im folgenden beschrieben wird, wie die Handling-Einheit und/oder der Greifer eingesetzt werden, erfolgt dies - soweit nichts anderes erwähnt wird - immer durch eine entsprechende Ansteuerung durch die Steuerung, welche hierzu entsprechend programmiert ist.

In einer möglichen Ausführungsform der vorliegenden Erfindung handelt es sich bei dem Steckaktor um einen Linearaktor. Beispielsweise kann es sich um einen Peneumatik-Zylinder und/oder einen elektromechanischen Linearantrieb handeln.

In einer möglichen Ausführungsform der vorliegenden Erfindung handelt es sich bei dem Greifer um einen mechanischen Greifer zum Greifen des Steckers.

Bevorzugt umfasst der Greifer mindestens zwei über einen Aktor relativ zueinander bewegbare mechanische Greifelemente, insbesondere Greifbacken und/oder Greiffinger.

Bevorzugt steht die Bewegungsachse des Steckaktors senkrecht auf der Bewegungsachse der Greifelemente.

In einer möglichen Ausführungsform der vorliegenden Erfindung bewegt der Steckaktor den Stecker zum Bewegen in die finale Steckposition über ein Schubelement.

Bei dem Schubelement kann es sich in einer möglichen Ausgestaltung der vorliegenden Erfindung um die Greifelemente des Greifers handeln.

In einer bevorzugten Ausgestaltung handelt es sich bei dem Schubelement jedoch um ein von den Greifelementen separates Element.

In einer möglichen Ausgestaltung der vorliegenden Erfindung drückt das Schubelement auf eine Oberseite des Steckers.

In einer möglichen Ausgestaltung der vorliegenden Erfindung ist das Schubelement oberhalb eines zwischen den Greifelementen vorgesehenen Aufnahmebereich für den Stecker angeordnet.

In einer möglichen Ausgestaltung der vorliegenden Erfindung ist die Steuerung so ausgeführt, dass sie den Greifer so angesteuert wird, dass er den Griff des Greifers lockert oder löst, bevor der Steckaktor den Stecker mittels des Schubelements in die finale Steckposition bewegt.

Dabei kann der Griff des Greifers gelockert oder gelöst werden, bevor das Schubelement den Stecker bewegt, oder zumindest bevor der Stecker in die finale gesteckte Position bewegt wurde.

Hierdurch wird vermieden, dass Spannungen von dem Greifer auf die Steckverbindung übertragen werden.

In einer möglichen Ausgestaltung der vorliegenden Erfindung ist die Steuerung so ausgeführt, dass sie die Handling-Einheit ansteuert, um den Stecker in eine Eingriffsposition mit dem Stecker-Gegenelement zu bewegen, und den Steckaktor ansteuert, um bei stehender Handling-Einheit den Stecker in eine finale Steckposition mit dem Stecker-Gegenelement zu bewegen.

Die vorliegende Erfindung umfasst in einem zweiten Aspekt eine Vorrichtung zum automatisierten Herstellen einer Steckverbindung eines an einem Kabel angeordneten Steckers mit einem Stecker-Gegenelement, umfassend einen Greifer zum Greifen des Steckers, eine Handling-Einheit mit mehreren Achsen zum Bewegen des Greifers und eine Steuerung zur Ansteuerung des Greifers und der Handling-Einheit. Dabei ist vorgesehen, dass der Greifer über eine Ausgleichseinheit an der Handling-Einheit angeordnet ist, wobei die Ausgleichseinheit in zumindest einem Betriebszustand eine Ausgleichbewegung des Greifers gegenüber der Handling-Einheit erlaubt.

Die Ausgleichseinheit verhindert die Übertragung von Spannungen von der Handling-Einheit auf den Greifer und damit auf die Steckverbindung. Weiterhin kann die Ausgleichseinheit je nach Ausgestaltung des Greifers auch das Zentrieren des Greifers gegenüber dem Stecker-Gegenelement erleichtern.

In einer möglichen Ausführungsform der vorliegenden Erfindung umfasst die Ausgleichseinheit eine oder mehrere Federn, gegen deren Vorspannung der Greifer seitlich und/oder axial ausgelenkt werden kann.

In einer möglichen Ausführungsform der vorliegenden Erfindung ist die Ausgleichseinheit von einem ersten Betriebszustand, in welchem die Ausgleichseinheit eine Ausgleichbewegung des Greifers gegenüber der Handling-Einheit erlaubt, in einen zweiten Betriebszustand schaltbar, in welchem der Greifer starr an der Handling-Einheit angeordnet ist.

Die oben im Hinblick auf den ersten Aspekt beschriebenen möglichen oder bevorzugten Ausgestaltungen der vorliegenden Erfindung gelten in gleicher Weise auch für eine Vorrichtung gemäß dem zweiten Aspekt.

Beide Aspekte können dabei auch unabhängig voneinander zum Einsatz kommen. Insbesondere kann ein Steckaktor auch bei einem Greifer eingesetzt werden, der starr mit einem Endglied der Handling-Einheit in Verbindung steht, und eine Ausgleichseinheit bei einem Greifer ohne Steckaktor, bei welchem die Steckverbindung daher ausschließlich über die Handling-Einheit hergestellt wird.

In einer bevorzugten Ausgestaltung kommen jedoch beide Aspekte in Kombination zum Einsatz, d.h. der Greifer ist über eine Ausgleichseinheit am Endglied der Handling-Einheit angeordnet und umfasst einen Steckaktor.

Bevorzugt ist der Steckaktor dabei an einem Grundkörper des Greifers angeordnet, welcher über die Ausgleichseinheit mit dem Endglied der Handling-Einheit in Verbindung steht.

Die vorliegende Erfindung umfasst in einem dritten Aspekt eine Vorrichtung zum automatisierten Herstellen einer Steckverbindung eines an einem Kabel angeordneten Steckers mit einem Stecker-Gegenelement, umfassend einen Greifer zum Greifen des Steckers, eine Handling-Einheit mit mehreren Achsen zum Bewegen des Greifers und eine Steuerung zur Ansteuerung des Greifers und der Handling-Einheit. Dabei ist vorgesehen, dass der Greifer eine Verriegelungs-Vorrichtung zum Verriegeln eines Verriegelungselementes des Steckers und/oder des Stecker-Gegenelements umfasst.

In einer möglichen Ausführungsform der vorliegenden Erfindung umfasst die Verriegelungs-Vorrichtung ein Kontaktelement zum Kontaktieren des Verriegelungselementes in einer gesteckten Position des Steckers.

Weiterhin umfasst der Greifer bevorzugt einen Aktor zum Bewegen des Kontaktelementes relativ zum Stecker.

Die oben im Hinblick auf den ersten und zweiten Aspekt beschriebenen möglichen oder bevorzugten Ausgestaltungen der vorliegenden Erfindung gelten in gleicher Weise auch für eine Vorrichtung gemäß dem dritten Aspekt.

Der dritte Aspekt kann auch unabhängig von dem ersten und dem zweiten Aspekt zum Einsatz kommen. Insbesondere kann eine Verriegelungs-Vorrichtung auch bei einem Greifer eingesetzt werden, der starr mit einem Endglied der Handling-Einheit in Verbindung steht und keinen Steckaktor umfasst, bei welchem die Steckverbindung daher ausschließlich über die Handling-Einheit hergestellt wird.

In einer bevorzugten Ausgestaltung kommt der dritte Aspekt jedoch in Kombination mit dem ersten und/oder dem zweiten Aspekt zum Einsatz, d.h. der Greifer weist eine Verriegelungs-Vorrichtung auf und ist über eine Ausgleichseinheit am Endglied der Handling-Einheit angeordnet und/oder umfasst einen Steckaktor.

In einer möglichen Ausführungsform der vorliegenden Erfindung wird der Steckaktor zum Bewegen des Kontaktelementes relativ zum Stecker genutzt.

Bevorzugt steht hierfür ein Schubelement zum Bewegen des Steckers beweglich und weiter bevorzugt federnd mit dem Steckaktor in Verbindung und erlaubt daher nach dem Bewegen des Steckers in die gesteckte Position eine weitere Bewegung des Steckaktors, durch welche das Kontaktelement gegen das Verriegelungselement bewegt wird. Bevorzugt ist das Schubelement dabei in Streckrichtung vorgespannt am Steckaktor und/oder einem vom Steckaktor bewegten Basiselement des Greifers angeordnet.

Bevorzugt steht das Kontaktelement beweglich mit dem Steckaktor in Verbindung und ist bevorzugt über eine Feder in Steckrichtung vorgespannt. Die Feder überträgt damit die Kraft zum Verriegeln des Verriegelungselementes auf das Kontaktelement.

In einer möglichen Ausführungsform der vorliegenden Erfindung wird die Endposition des Steckaktors über einen Sensor erkannt. Bevorzugt wird die Bewegung des Steckaktors gestoppt, sobald die Endposition, in welcher das Verriegelungselement verriegelt wurde, erreicht wurde.

In einer alternativen Ausgestaltung kann der Greifer einen zusätzlichen Aktor zum Bewegen des Kontaktelementes aufweisen.

In einer möglichen Ausführungsform der vorliegenden Erfindung wird die Endposition des Aktors, welcher zum Bewegen des Kontaktelementes eingesetzt wird, über einen Sensor erkannt. Bevorzugt wird die Bewegung des Aktors gestoppt, sobald die Endposition, in welcher das Verriegelungselement verriegelt wurde, erreicht wurde.

Die vorliegende Erfindung umfasst in einem vierten Aspekt eine Vorrichtung zum automatisierten Herstellen einer Steckverbindung eines an einem Kabel angeordneten Steckers mit einem Stecker-Gegenelement, umfassend einen Greifer zum Greifen des Steckers, eine Handling-Einheit mit mehreren Achsen zum Bewegen des Greifers und eine Steuerung zur Ansteuerung des Greifers und der Handling-Einheit. Dabei ist vorgesehen, dass der Greifer mindestens ein Ausrichtelement aufweist, welches mit dem Stecker-Gegenelement in Anlage gebracht werden kann, um den Stecker zu dem Stecker-Gegenelement auszurichten.

Hierdurch kann der Greifer mechanisch gegenüber dem Stecker-Gegenelement zentriert werden. Anders als im Stand der Technik erfolgt dies jedoch nicht durch einen Kontakt zwischen Stecker und Stecker-Gegenelement, sondern durch einen Kontakt zwischen dem Ausrichtelement des Greifers und dem Stecker-Gegenelement.

In einer möglichen Ausgestaltung der vorliegenden Erfindung ist die Vorrichtung so ausgestaltet, dass das Ausrichtelement mit einer Seitenfläche des Stecker-Gegenelementes in Anlage kommt.

In einer möglichen Ausgestaltung der vorliegenden Erfindung sind das Ausrichtelement und der mittels des Greifelements gehaltene Stecker mittels eines Aktor des Greifers relativ zueinander bewegbar, um den Stecker zu dem Stecker-Gegenelement auszurichten. Das Ausrichten erfolgt daher nicht oder zumindest nicht ausschließlich über eine Bewegung der Handling-Einheit.

In einer möglichen Ausführungsform der vorliegenden Erfindung umfasst der Greifer mindestens zwei Ausrichtelemente, welche das Stecker-Gegenelement auf gegenüberliegenden Seiten umfassen und über den mindestens einen Aktor aufeinander zu verfahrbar sind, um den Stecker gegenüber dem Stecker-Gegenelement auszurichten.

In einer möglichen Ausführungsform der vorliegenden Erfindung greifen die Ausrichtelemente das Stecker-Gegenelement.

In einer möglichen Ausführungsform der vorliegenden Erfindung erfolgt das Ausrichten des Steckers durch Ausrichten des Greifers.

In einer möglichen Ausführungsform der vorliegenden Erfindung ist die Steuerung so ausgestaltet ist, dass der Stecker in eine Eingriffsposition mit dem Stecker-Gegenelement gebracht wird, während das mindestens eine Ausrichtelement in Kontakt mit dem Stecker-Gegenelement ist und bevorzugt die Ausrichtelemente das Stecker-Gegenelement greifen. Bevorzugt erfolgt auch die Bewegung des Steckers in die finale Steckposition, während das mindestens eine Ausrichtelement in Kontakt mit dem Stecker-Gegenelement ist und bevorzugt die Ausrichtelemente das Stecker-Gegenelement greifen.

In einer möglichen Ausgestaltung der vorliegenden Erfindung ist das Ausrichtelement durch einen Aktor bewegbar am Greifer angeordnet ist und bewegt diesen relativ zur Handling-Einheit.

Die oben im Hinblick auf den ersten bis dritten Aspekt beschriebenen möglichen oder bevorzugten Ausgestaltungen der vorliegenden Erfindung gelten in gleicher Weise auch für eine Vorrichtung gemäß dem vierten Aspekt.

Der vierte Aspekt kann auch unabhängig von dem ersten bis dritten Aspekt zum Einsatz kommen. Insbesondere kann ein Ausrichtelement auch bei einem Greifer eingesetzt werden, der starr mit einem Endglied der Handling-Einheit in Verbindung steht und keinen Steckaktor und/oder keine Verriegelungs-Vorrichtung umfasst.

In einer bevorzugten Ausgestaltung kommt der vierte Aspekt jedoch in Kombination mit einem oder mehreren oder allen der zuvor beschriebenen Aspekte zum Einsatz.

Insbesondere kann der vierte Aspekt mit dem ersten und/oder zweiten Aspekt kombiniert werden, d.h. der Greifer weist ein Ausrichtelement auf und ist über eine Ausgleichseinheit am Endglied der Handling-Einheit angeordnet und/oder umfasst einen Steckaktor.

In einer bevorzugten Ausgestaltung ist das Ausrichtelement durch einen Aktor bewegbar am Greifer angeordnet und bewegt diesen relativ zur Handling-Einheit, wobei diese Bewegung durch die zwischen Greifer und Handling-Einheit angeordnete Ausgleichseinheit ermöglicht wird, welche durch das Ausrichtelement zum Ausrichten des Greifers ausgelenkt wird.

Die vorliegende Erfindung umfasst in einem fünften Aspekt eine Vorrichtung zum automatisierten Herstellen einer Steckverbindung eines an einem Kabel angeordneten Steckers mit einem Stecker-Gegenelement, umfassend einen Greifer zum Greifen des Steckers, eine Handling-Einheit mit mehreren Achsen zum Bewegen des Greifers und eine Steuerung zur Ansteuerung des Greifers und der Handling-Einheit. Dabei ist vorgesehen, dass die Vorrichtung eine Kamera zur Erfassung der Position des Stecker-Gegenelements umfasst, wobei die Steuerung bevorzugt so ausgestaltet ist, dass der am Greifer aufgenommene Stecker auf Grundlage der erfassten Position in eine Einstreckposition vor das Stecker-Gegenelement verfahren wird.

In einer möglichen Ausgestaltung der vorliegenden Erfindung ist die Kamera am Greifer angeordnet, wobei die Steuerung bevorzugt so ausgestaltet ist, dass die Kamera zunächst in eine Messposition vor das Stecker-Gegenelement verfahren wird, um die Position des Stecker-Gegenelementes zu erfassen, und daraufhin durch Umpositionieren des Greifers der am Greifer aufgenommene Stecker in die Einstreckposition verfahren wird.

In einer möglichen Ausgestaltung der vorliegenden Erfindung erfolgt die Ausrichtung des Steckers gegenüber dem Stecker-Gegenelement ausschließlich über die Ansteuerung der Position des Greifers auf Grundlage der von der Kamera erfassten Position des Stecker-Gegenelementes, d.h. ohne eine zusätzliche mechanische Ausrichtung am Stecker-Gegenelement.

In einer möglichen Ausgestaltung der vorliegenden Erfindung wird die Positionserfassung eingesetzt, um einen Offset zwischen einer tatsächlichen Position und einer vorgesehenen Position des Stecker-Gegenelementes zu bestimmen und die Position des Greifers zum Stecken des Steckers entsprechend zu korrigieren.

Die oben im Hinblick auf den ersten bis vierten Aspekt beschriebenen möglichen oder bevorzugten Ausgestaltungen der vorliegenden Erfindung gelten in gleicher Weise auch für eine Vorrichtung gemäß dem fünften Aspekt.

Insbesondere kann die erfindungsgemäße Vorrichtung gemäß dem fünften Aspekt eine Vorrichtung zur automatisierten Verkabelung von Batterie-Modulen, insbesondere bei der Herstellung von Fahrzeugen mit Hybrid- und/oder Elektroantrieb, darstellen.

Der fünfte Aspekt kann auch unabhängig von dem ersten bis vierten Aspekt zum Einsatz kommen. Insbesondere kann die Kamera auch bei einem Greifer eingesetzt werden, der starr mit einem Endglied der Handling-Einheit in Verbindung steht und keinen Steckaktor und/oder keine Verriegelungs-Vorrichtung umfasst. Weiterhin ist beim Einsatz einer Kamera ein Ausrichtelement üblicherweise nicht mehr notwendig.

In einer möglichen Ausgestaltung kommt der fünfte Aspekt jedoch in Kombination mit einem oder mehreren oder allen der zuvor beschriebenen Aspekte zum Einsatz.

Insbesondere kann der fünfte Aspekt mit dem ersten und/oder zweiten Aspekt kombiniert werden, d.h. die Vorrichtung weist eine Kamera auf und der Greifer ist über eine Ausgleichseinheit am Endglied der Handling-Einheit angeordnet und/oder umfasst einen Steckaktor.

In einer möglichen Ausführungsform der vorliegenden Erfindung erfolgt die Erfassung der Position des Stecker-Gegenelements und/oder das Verfahren des Steckers in die Einsteckposition mit einem starr geschalteten Ausgleichselement und das Bewegen des Steckers in die gesteckte Position mittels des Steckaktors mit einer nachgiebig geschalteten Ausgleichseinheit erfolgt.

Die vorliegende Erfindung umfasst weiterhin die Greifer für die Vorrichtungen, wie sie oben beschrieben wurden.

Insbesondere umfasst die vorliegende Erfindung dabei einen Greifer mit mindestens einem Greifelement zum Greifen eines an einem Kabel angeordneten Steckers, wobei der Greifer zum Fügen einer Steckverbindung mit einem Stecker-Gegenelement einsetzbar ist, wobei der Greifer einen Steckaktor und/oder eine Ausgleichsvorrichtung und/oder eine Verriegelungs-Vorrichtung und/oder ein Ausrichtelement und/oder eine Kamera umfassen. Bevorzugt ist der Greifer dabei so ausgestaltet, wie dies oben bereits beschrieben wurde.

Die vorliegende Erfindung umfasst weiterhin ein Verfahren zum automatisierten Herstellen einer Steckverbindung eines an einem Kabel angeordneten Steckers mit einem Stecker-Gegenelement mit einer der Vorrichtungen, wie sie oben beschrieben wurden.

Gemäß dem ersten Aspekt wird der Stecker durch den Steckaktor in eine gesteckte Position mit dem Stecker-Gegenelement bewegt.

Gemäß dem zweiten Aspekt wird der Greifer gegenüber dem Endglied der Handling-Einheit in zumindest einem Betriebszustand ausgelenkt.

Gemäß dem dritten Aspekt wird eine Verriegelungselement des Steckers und/oder des Stecker-Gegenelements durch die Verriegelungsvorrichtung des Greifers verriegelt.

Gemäß dem vierten Aspekt wird der Stecker gegenüber dem Stecker-Gegenelement durch das Ausrichtelement mechanisch ausgerichtet.

Gemäß dem fünften Aspekt wird die Position des Stecker-Gegenelements durch die Kamera erfasst.

Die Verfahren verlaufen bevorzugt so, wie dies bereits oben im Hinblick auf die Vorrichtung näher beschrieben wurde.

Die Verfahren werden insbesondere zur Verkabelung von Batterie-Modulen, insbesondere bei der Herstellung von Fahrzeugen mit Hybrid- und/oder Elektroantrieb, eingesetzt.

Insbesondere können hierdurch Kabel, welche als Modulverbinder zum Verbinden von Batteriemodulen dienen, montiert werden.

Die vorliegende Erfindung wird nun anhand von Ausführungsbeispielen und Zeichnungen näher beschrieben.

Dabei zeigen:
- Fig. 1:: Erstes Ausführungsbeispiel einer erfindungsgemäßen Vorrichtung zum automatisierten Herstellen einer Steckverbindung,
- Fig. 2:: Ein erstes Ausführungsbeispiel eines erfindungsgemäßen Greifers,
- Fig. 3:: Eine perspektivische Ansicht und eine Schnittansicht des in Fig. 2 gezeigten Greifers,
- Fig. 4:: Ein zweites Ausführungsbeispiel eines erfindungsgemäßen Greifers,
- Fig. 5:: Eine perspektivische Darstellung des in Fig. 4 gezeigten zweiten Ausführungsbeispiels,
- Fig. 6a und 6b:: Eine Schnittansicht und eine Vorderansicht des in Fig. 4 und 5 gezeigten zweiten Ausführungsbeispiels,
- Fig. 7:: Ein zweites Ausführungsbeispiel einer erfindungsgemäßen Vorrichtung zum automatisierten Herstellen einer Steckverbindung,
- Fig. 8:: Eine Detailansicht der Handling-Einheit, welche im in Fig. 7 gezeigten zweiten Ausführungsbeispiel der Vorrichtung zum Einsatz kommt,
- Fig. 9:: Ein drittes Ausführungsbeispiel einer erfindungsgemäßen Vorrichtung,
- Fig. 10:: Ein viertes Ausführungsbeispiel einer erfindungsgemäßen Vorrichtung,
- Fig. 11:: Eine Detailansicht der in Fig. 10 gezeigten Vorrichtung beim Positionieren eines Kabels,
- Fig. 12:: Ein drittes Ausführungsbeispiel eines erfindungsgemäßen Greifers, wie er bei dem Ausführungsbeispiel gemäß Fig. 10 und 11 der Vorrichtung zum Einsatz kommt,
- Fig. 13:: Eine Detailansicht des bereits in Fig. 1 gezeigten ersten Ausführungsbeispiels einer erfindungsgemäßen Vorrichtung,
- Fig. 14:: Ein viertes Ausführungsbeispiel eines erfindungsgemäßen Greifers, und
- Fig. 15:: Ein fünftes Ausführungsbeispiel eines erfindungsgemäßen Greifers.

Im Folgenden werden Ausführungsbeispiele der vorliegenden Erfindung näher beschrieben, welche teilweise mehrere Aspekte der Erfindung in Kombination verwirklichen. Die in diesen Ausführungsbeispielen in Kombination gezeigten Aspekte können jedoch auch jeweils für sich genommen eingesetzt werden.

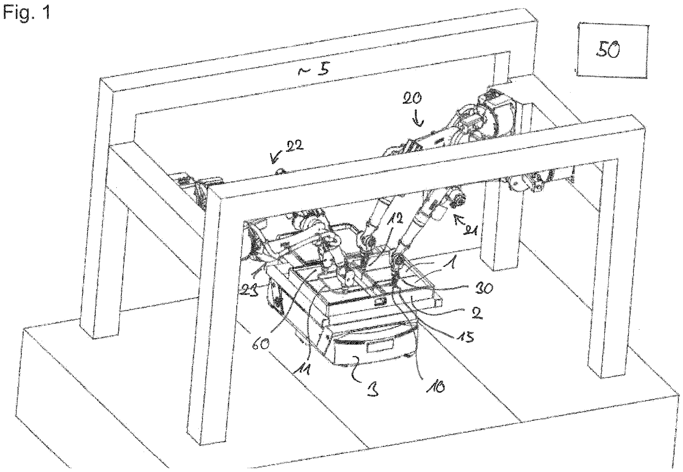

Fig. 1 zeigt ein erstes Ausführungsbeispiel einer erfindungsgemäßen Vorrichtung zum automatisierten Herstellen einer Steckverbindung eines Steckers 10 mit einem Stecker-Gegenelement 15.

Das in der Fig. 1 gezeigte Ausführungsbeispiel der erfindungsgemäßen Vorrichtung wird zur Verkabelung von Batteriemodulen 1 eingesetzt, insbesondere bei der Herstellung von Fahrzeugen mit Hybrid- und/oder Elektroantrieb. Dabei sind üblicherweise mehrere Batteriemodule an einer Tragkonstruktion 2 montiert und weisen jeweils Stecker-Gegenelemente, beispielsweise in Form von Steckerleisten oder Stecker-Buchsen, auf, über welche die Batteriemodule miteinander und/oder mit einer Steuerung in Verbindung stehen. Bei der Tragvorrichtung 2 kann es sich beispielsweise um einen Teil des Chassis des entsprechenden Fahrzeugs handeln, oder einer Traganordnung, welche an ein solches Chassis montiert wird.

Die Verkabelung solcher Batteriemodule erfolgt bisher händisch, da keine Vorrichtungen zum automatisierten Herstellen der Steckverbindungen zur Verfügung standen. Die vorliegende Erfindung bietet nunmehr eine solche Vorrichtung, über welche die Steckverbindungen insbesondere bei Batteriemodulen automatisiert hergestellt werden können.

Insbesondere erfolgt der Einsatz der vorliegenden Erfindung im Rahmen der Herstellung von Fahrzeugen mit Hybrid- und/oder Elektroantrieb. Die Tragvorrichtungen 2, an welchen die Module 1 montiert sind, können dabei über eine Transportanordnung 3 zur erfindungsgemäßen Vorrichtung transportiert werden, um die Steckverbindungen herzustellen. Die erfindungsgemäße Vorrichtung kann dabei Teil einer Produktionsstraße zur Herstellung der Fahrzeuge sein.

Die erfindungsgemäße Vorrichtung kann dabei in einer möglichen Anwendung zur Montage von Kabeln eingesetzt werden, an deren beiden Enden jeweils ein Stecker angeordnet ist, welcher durch die erfindungsgemäße Vorrichtung mit einem Stecker-Gegenelement verbunden wird.

In alternativen Ausgestaltungen könnte ein Ende des Kabels aber auch bereits elektrisch konnektiert sein.

In einer möglichen Ausgestaltung ist die erfindungsgemäße Vorrichtung so ausgestaltet und deren Steuerung insbesondere so programmiert, dass durch die Vorrichtung mehrere Kabel nacheinander an der Batterieeinheit des gleichen Fahrzeugs montiert werden. Bevorzugt können dabei Kabel unterschiedlicher Länge und/oder mit einem unterschiedlichen Verlauf des Kabels montiert werden.

In Möglichen Ausgestaltungen der vorliegenden Erfindung können mehrere erfindungsgemäße Vorrichtungen hintereinander in einer Produktionsstraße angeordnet werden, wobei in einer möglichen Ausgestaltung eine erste Vorrichtung kürzere Kabel montiert als eine zweite Vorrichtung.

Der oben beschriebene Einsatz zur Verkabelung von Batteriemodulen ist nicht nur bei dem in Fig. 1 gezeigten ersten Ausführungsbeispiel einer erfindungsgemäßen Vorrichtung möglich: Vielmehr können sämtliche Ausführungsbeispiele der vorliegenden Erfindung zu diesem Einsatzzweck eingerichtet sein und eingesetzt werden. Die erfindungsgemäßen Vorrichtungen können jedoch auch in anderen Bereichen der industriellen Produktion, insbesondere als Teil einer Produktionsstraße, dazu eingesetzt werden, um elektrische Anschlüsse durch das Herstellen von Steckverbindungen vorzunehmen.

Die erfindungsgemäßen Vorrichtungen weisen dabei wie in Fig. 1 gezeigt jeweils mindestens einen Greifer 30 zum Greifen des Steckers 10, eine Handling-Einheit 20 - 23 mit mehreren Achsen zum Bewegen des mindestens einen Greifers 30, sowie eine Steuerung 50 zur Ansteuerung des Greifers 30 und der Handling-Einheit 20 - 23 auf.

Bei dem in Fig. 1 gezeigten Ausführungsbeispiel handelt es sich bei der eingesetzten Handling-Einheit jeweils um einen Mehr-Achs-Roboter mit mehreren rotatorischen Achsen, insbesondere um einen Sechs-Achs-Industrieroboter. In alternativen Ausgestaltungen, welche im Folgenden ebenfalls noch beschrieben werden, können anstelle oder zusätzlich zu einem solchen Mehr-Achs-Roboter auch Flächenportale mit mehreren linearen Achsen eingesetzt werden. Die Handling-Einheiten 20 - 23 könne wie in Fig. 1 gezeigt an einem Traggerüst 5 angeordnet sein.

Die Steuerung 50 der erfindungsgemäßen Vorrichtung ist jeweils so programmiert, dass die im Rahmen der vorliegenden Anmeldung beschriebenen Verfahren zum Herstellen einer Steckverbindung eines Steckers mit einem Stecker-Gegenelement automatisiert durchgeführt werden. Insbesondere erfolgt die gesamte Montage der Kabel und Stecker automatisiert.

Die Steuerung, welche in Fig. 1 lediglich schematisch dargestellt ist, kann hierfür einen Mikroprozessor und einen in einem Speicher abgespeicherten Programmcode aufweisen, wobei der Programmcode, läuft er auf dem Mikroprozessor ab, die Handling-Einheit und Greifer entsprechend ansteuert. Soweit im Rahmen der vorliegenden Anmeldung dabei beschrieben wird, wie die Handling-Einheit und/oder der Greifer eingesetzt werden, erfolgt dies - soweit nichts anderes erwähnt wird - immer durch eine entsprechende Ansteuerung durch die Steuerung 50, welche hierzu entsprechend programmiert ist.

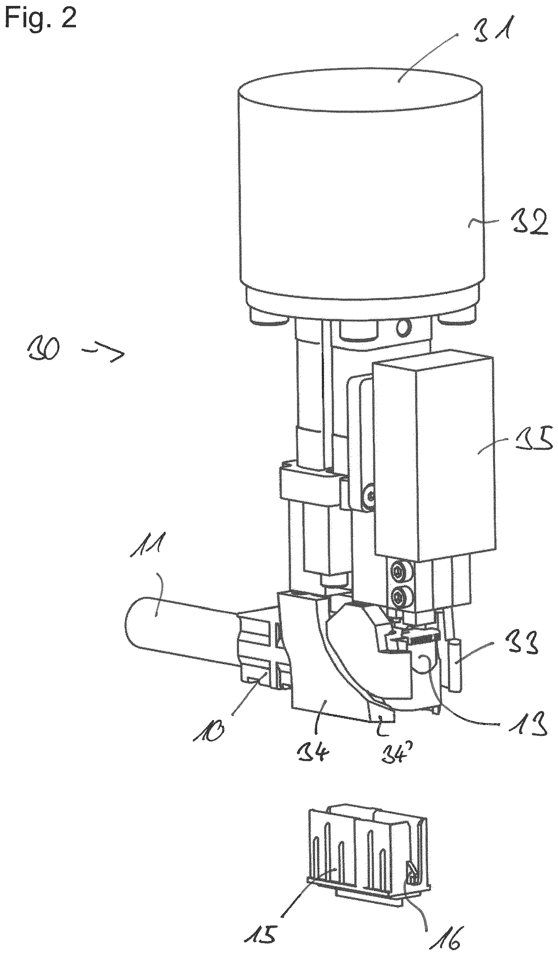

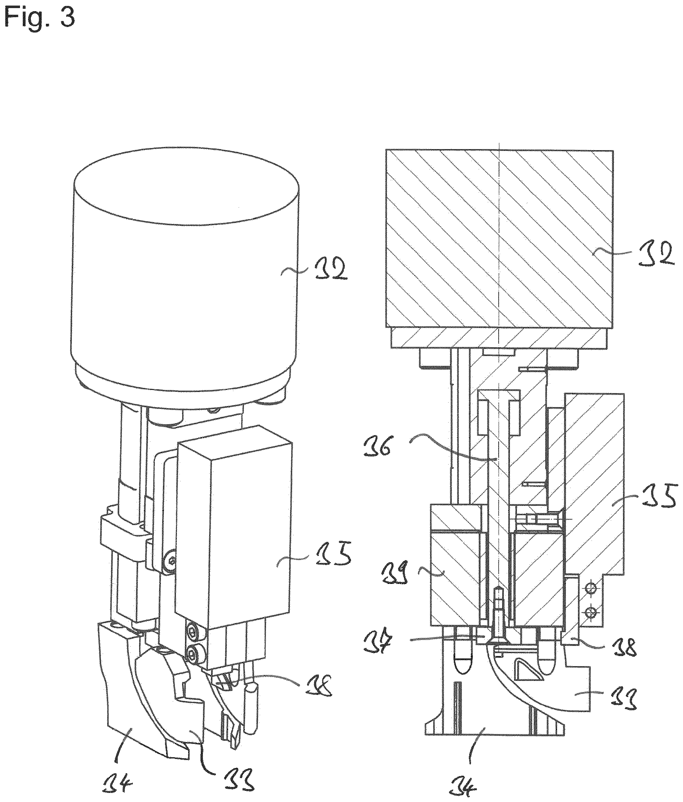

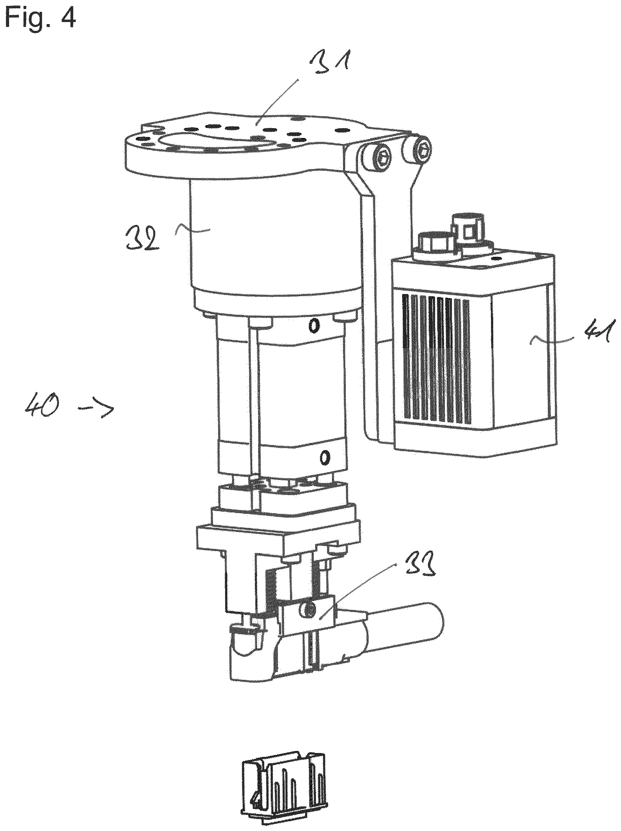

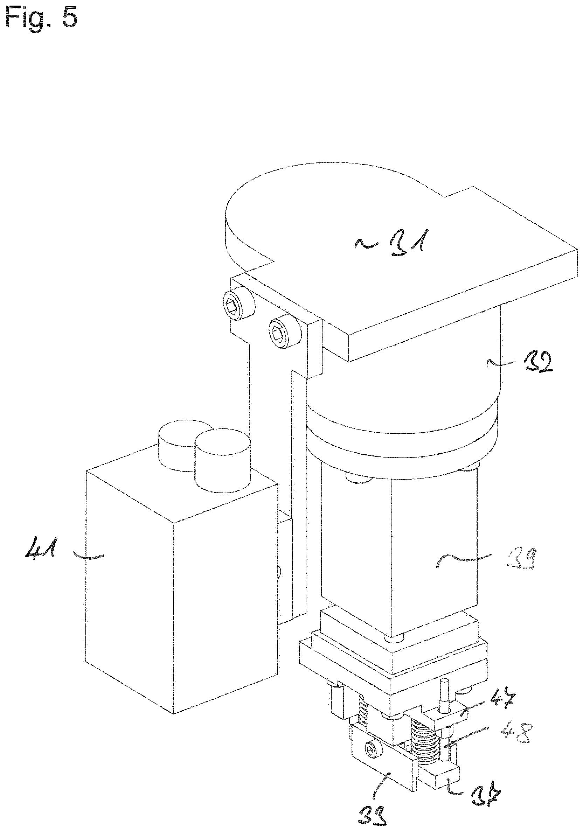

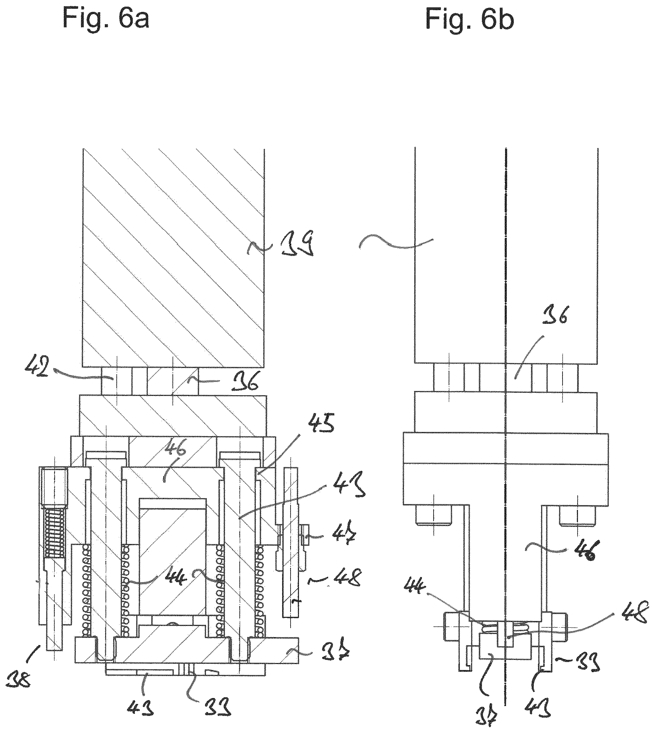

Die erfindungsgemäßen Merkmale der in Fig. 1 gezeigten Vorrichtung werden im Folgenden noch näher beschrieben. Zunächst jedoch sollen Ausführungsbeispiele erfindungsgemäßer Greifer, welche zum Greifen des Steckers eingesetzt werden, beschrieben werden: Fig. 2 und 3 zeigen dabei ein erstes Ausführungsbeispiel eines erfindungsgemäßen Greifers zum Greifen eines Steckers, Fig. 4 - 6 ein zweites Ausführungsbeispiel.

Die Greifer dienen dabei jeweils zum Greifen eines Steckers 10, welcher in ein Stecker-Gegenelement 15 in Form einer Steckerleiste eingeschoben wird. Der Stecker 10 ist dabei an einem Kabel 11 angeordnet, und stellt eine elektrische Verbindung zwischen dem Kabel 11 und dem Stecker-Gegenelement 15 her.

Im Ausführungsbeispiel weist der Stecker 10 ein Verriegelungselement 13 auf, welches mechanisch betätigbar ist und den Stecker in der gesteckten Position verriegelt. Das Verriegelungselement 13 kann hierfür mit einem Gegenelement 16 des Stecker-Gegenelementes zusammenwirken, bei welchem es sich beispielweise um eine Rastnase handeln kann. Erfindungsgemäße Greifer können jedoch auch zum Stecken von Steckern ohne ein Verriegelungselement eingesetzt werden.

In einem ersten Aspekt der vorliegenden Erfindung erfolgt die Bewegung, mit welcher der Stecker in die gesteckte Position mit dem Stecker-Gegenelement 15 eingeschoben wird, zumindest nicht ausschließlich durch die Handling-Einheit 20, sondern zumindest zum Teil auch durch einen Steckaktor 36 des jeweiligen Greifers. Die Verwendung eines solchen Steckaktors 36, welcher auch als Fügeaktor bezeichnet werden kann, erlaubt es den erfindungsgemäßen Greifern, die Steckverbindung effizienter und belastungsfreier für Stecker und Stecker-Gegenelement herzustellen.

Bei dem Steckaktor kann es sich insbesondere um einen Linearaktor handeln, welcher den Stecker in eine gesteckte Position mit dem Stecker-Gegenelement 15 bewegt. Insbesondere kann der Steckaktor 36 den Stecker 10 dabei auf einen Endanschlag des Stecker-Gegenelementes 15 drücken, um die Steckverbindung zu fügen.

Die Bewegungsachse des Steckaktors 36 verläuft im Ausführungsbeispiel senkrecht zur Bewegungsachse der Greifbacken 33 des Greifers. Weiterhin steht die Bewegungsachse des Steckaktors 36 senkrecht auf einer durch die Oberseite des Steckers 10 bzw. die Kontaktfläche des Schubelements 37 definierten Ebene. Weiterhin verläuft die Bewegungsachse des Steckators 36 in Steckrichtung des Steckers.

Bei dem Fügeaktor 36 handelt es sich in den Ausführungsbeispielen jeweils um einen Pneumatikzylinder. Es sind jedoch auch beliebige andere Aktoren, insbesondere beiliebige andere Linearaktoren denkbar, beispielsweise ein elektromechanischer Antrieb oder ein hydraulischer Antrieb.

Der Greifer weist zum Greifen des Steckers 10 eines oder mehrere jeweils Greifelemente 33 auf, über welche der Stecker 10 gegriffen wird. In den Ausführungsbeispielen handelt es sich bei dem Greifer um einen mechanischen Greifer. Dementsprechend kommen mechanische Greifelemente zum Einsatz, insbesondere zwei Greifbacken, welche mittels eines Aktors aufeinander zubewegt werden können, um den Stecker zu greifen. In alternativen Ausgestaltungen könnten jedoch auch andere Greifer zum Einsatz kommen, beispielsweise pneumatische Greifer.

In den Ausführungsbeispielen wirkt der Steckaktor 36 zum Bewegen des Steckers jedoch nicht durch die Greifelemente 33 auf den Stecker 10, sondern dadurch, dass der Steckaktor 36 ein Schubelement 37 bewegt, welches gegen die Oberseite des Steckers 10 drückt und diesen in die gesteckte Position einschiebt.

In den Ausführungsbeispielen wird der Greifer dabei so angesteuert, dass die Greifelemente 33 ihren Griff auf den Stecker lockern oder lösen, bevor der Steckaktor den Stecker in die gesteckte Position bewegt hat.

Bei dem ersten in Fig. 2 und 3 gezeigten Ausführungsbeispiel bewegt der Steckaktor 36 das Schubelement 37 dabei relativ zu den Greifelementen 33 des Greifers. Bei diesem Ausführungsbeispiel wirkt der Steckaktor dabei zwischen einem Grundkörper des Greifers, an welchem auch die Greifelemente 33 angeordnet sind, und dem Schubelement 37, so dass eine Bewegung des Steckaktors 36 keine Bewegung der Greifelemente 33 zur Folge hat.

Bei dem zweiten in Fig. 4 - 6 dargestellten Ausführungsbeispiel bewegt der Steckaktor 36 dagegen sowohl die Greifelemente 33 des Greifers als auch das Schubelement 37. Der Stecker wird jedoch durch das Schubelement 37 in die finale Steckposition geschoben, während sich die Greifelemente 33 lediglich mit dem Stecker mitbewegen.

In alternativen Ausgestaltungen wäre es jedoch auch denkbar, dass der Steckaktor die Greifelemente bewegt, um den in den Greifelementen aufgenommenen Stecker mittels der Greifelemente in die gesteckte Position zu bewegen.

Im Ausführungsbeispiel ist die Steuerung 50 jeweils so ausgeführt, dass sie die Handling-Einheit ansteuert, um den Stecker in eine Eingriffsposition mit dem Stecker-Gegenelement 15 zu bewegen. Daraufhin wird die Handling-Einheit nicht mehr weiterbewegt, sondern der Steckaktor angesteuert, um bei stehender Handling-Einheit den Stecker in die finale Steckposition mit dem Stecker-Gegenelement 15 zu bewegen. Die Handling-Einheit wird daher nur genutzt, um den Stecker in Eingriff mit dem Stecker-Gegenelement zu bringen, der eigentliche Steckvorgang folgt dann über den Steckaktor 36.

Wie bereits oben dargestellt wird dabei der Griff des Greifers, nachdem der Stecker in die Eingriffsposition gebracht wurde, gelockert oder gelöst, und der Stecker dann durch das Schubelement in die finale Steckposition eingeschoben.

Im Ausführungsbeispiel weisen die Greifer weisen jeweils ein Montageelement 31 auf, mittels welchem sie an dem Endglied der Handling-Einheit montiert werden. Wie in Figur 4 ersichtlich kann es sich dabei um eine Flansch-Platte handeln.

Der Steckaktor 36 ist dabei so am Greifer angeordnet, dass er ein Element des Greifers, insbesondere das Schubelement 37 und/oder die Greifelemente 33 des Greifers, relativ zu diesem Montageelement 31 und damit relativ zum Endglied zur Handling-Einheit bewegen kann.

In einem weiteren Aspekt der vorliegenden Erfindung, welcher auch unabhängig vom Einsatz eines Steckaktors Teil der vorliegenden Erfindung ist, umfassen die Ausführungsbeispiele der erfindungsgemäßen Greifer eine Ausgleichseinheit 32, welche in zumindest einem Betriebszustand eine Ausweichbewegung des Greifers relativ zum Montageelement 31 und damit dem Endglied der Handling-Einheit erlaubt.

In beiden Ausführungsbeispielen erfolgt das Stecken des Steckers in die finale Steckposition dabei in einem Zustand der Ausgleichseinheit, in welchem diese eine Ausgleichsbewegung ermöglicht. Hierdurch werden Spannungen, welche ansonsten von der Handling-Einheit auf den Stecker übertragen würden, von diesem ferngehalten.

In einer möglichen Ausgestaltung kann die Ausgleichseinheit 32 schaltbar sein, und insbesondere von einem ersten Betriebszustand, in welchem die Ausgleichseinheit eine Ausgleichbewegung des Greifers gegenüber der Handling-Einheit erlaubt, in einen zweiten Betriebszustand schaltbar sein, in welchem der Greifer starr an der Handling-Einheit angeordnet ist. In alternativen Ausgestaltungen der vorliegenden Erfindung kann sich die Ausgleichseinheit auch immer im ersten Betriebszustand befinden, in welchem sie eine Ausgleichsbewegung erlaubt.

Die Ausgleichseinheit 32 kann dabei eine oder mehrere Federn aufweisen, gegen deren Vorspannung der Greifer seitlich oder in axialer Richtung auslenken kann.

Die Ausgleichseinheit kann dabei beispielsweise so aufgebaut sein, wie dies in der Druckschrift EP 2 679 354 A2 der gleichen Anmelderin mit Bezug auf die Figuren 16 - 22 beschrieben ist.

Die Schaltbarkeit kann dabei beispielsweise pneumatisch zur Verfügung gestellt werden, indem zum Fixieren der Schalteinheit pneumatisch eine Haltekraft erzeugt wird, durch welche der Greifer gegenüber dem Montageelement 31 fixiert wird.

In einem weiteren Aspekt der vorliegenden Erfindung, welcher ebenfalls unabhängig von den bisher beschriebenen Aspekten zum Einsatz kommen kann, umfasst der Greifer eine Verriegelungsvorrichtung zum Verriegeln des Verriegelungselementes 13 des Steckers 10.

Im Ausführungsbeispiel ist hierfür jeweils ein Kontaktelement 38 vorgesehen, welches in der gesteckten Position des Steckers 10 das Verriegelungselement 13 kontaktiert und dieses in die verriegelte Position bewegt.

Das Kontaktelement 38 ist in beiden Ausführungsbeispielen über einen Aktor des Greifers bewegbar. In beiden Fällen handelt es sich um einen Linearaktor. Als Aktor kann dabei entweder der Steckaktor 36, oder ein hiervon separater, weiterer Aktor 35 eingesetzt werden.

Jedenfalls ist in beiden Ausführungsbeispielen die Anordnung zum Bewegen des Kontaktelementes 38 so ausgeführt, dass das Kontaktelement relativ zu dem Schubelement 37, mit welchem der Stecker in die gesteckte Position geschoben wird, bewegbar ist, um das Verriegelungselement 13 des Steckers zu betätigen.

Da die beiden Ausführungsbeispiele des Greifers jeweils im Rahmen der industriellen Montage von Kabeln und Steckern eingesetzt werden, ist die Position des Stecker-Gegenelementes bereits vorab aus der Geometrie der Vorrichtung, an welcher der Stecker gesteckt werden soll, d.h. beispielsweise aus der Position und Anordnung des Batteriemoduls, bekannt. Allerdings treten in der industriellen Produktion durch Toleranzen gewisse Abweichungen der tatsächlichen Position von der vorgesehenen Position auf.

Um diese Abweichungen ausgleichen zu können, weisen die beiden Ausführungsbeispiele jeweils eine Ausricht-Vorrichtung auf, durch welche der Stecker in die richtige Position zu dem Stecker-Gegenelement ausgerichtet werden kann, um ein Stecken des Steckers trotz einer Abweichung der tatsächlichen Position des Stecker-Gegenelementes von der hierfür vorgesehenen Position zu ermöglichen.

Diese Ausricht-Vorrichtungen sind jeweils auch unabhängig von den oben beschriebenen Aspekten ein eigenständiger Gegenstand der vorliegenden Erfindung.

Bei dem in Fig. 2 und 3 gezeigten Ausführungsbeispiel erfolgt die Ausrichtung des Greifers mechanisch über ein Ausrichtelement 34 des Greifers, welches mit dem Stecker-Gegenelement und insbesondere mindestens einer Seitenfläche des Stecker-Gegenelements in Anlage gebracht wird, um den Stecker zu dem Stecker-Gegenelement auszurichten.

Im Ausführungsbeispiel sind hierfür zwei über einen Aktor relativ zueinander bewegbare Ausrichtelemente 34 vorgesehen, im Ausführungsbeispiel sind diese als Ausrichtbacken ausgeführt. Die Ausrichtelemente 34 bilden dabei Greifelemente, welche das Stecker-Gegenelement 15 umgreifen.

Das Ausrichten des Greifers relativ zum Stecker-Gegenelement 15 erfolgt dabei in einem Betriebszustand der Ausgleichseinheit 32, in welcher diese eine Ausgleichsbewegung des Greifers erlaubt. Durch das Schließen der Ausrichtelemente um das Stecker-Gegenelement 15 wird der Greifer daher gegenüber diesem ausgerichtet. In Bewegungsrichtung der Ausrichtelemente 34 erfolgt dies unmittelbar durch den Aktor der Ausrichtelemente 34, in einer Richtung senkrecht hierzu durch die Anlaufschrägen 34' der Ausrichtelemente 34, welche Kanten des Steckers auf beiden Seiten umgreifen und gegenüber den Ausrichtelementen 34 zentrieren.

Sowohl die Ausrichtelemente 34 als auch die Greifelemente 33 sind an einem Grundkörper 39 des Greifers angeordnet. Die Bewegungsachsen der Ausrichtelemente 34 und der Greifelemente 33 verlaufen parallel zueinander.

Im Ausführungsbeispiel erstecken sich die Ausrichtelemente 34 zumindest teilweise in Steckrichtung unterhalb der Greifelemente 33 zum Greifen des Steckers 10.

Hierdurch ragen im Ausführungsbeispiel die Ausrichtelemente 34 über die Vorderseite des Stecker-Gegenelementes 15 hinaus, so dass Anlaufschrägen 34' mit den Ecken des Steckers in Kontakt kommen, wenn sich die Ausrichtelemente 34 in einer Position schließen, in welcher das Stecker-Gegenelement 15 tatsächlich weiter vorne angeordnet ist als vorgesehen.

Das Schubelement 37 ist über den Steckaktor 36 ebenfalls am Grundkörper 39 des Greifers angeordnet und kann daher unabhängig von den Greifelementen 33 und den Ausrichtelementen 34 bewegt werden.

Das Schubelement 37 ist dabei zwischen den jeweils die Seiten des Steckers bzw. des Stecker-Gegenelements umgreifenden Greifelementen 33 und den Ausrichtelementen 34 über dem durch die Greifelementen 33 gebildeten Aufnahmebereich für den Stecker angeordnet und drückt so auf die Oberseite des Steckers, um diesen in das Stecker-Gegenelement 15 einzuschieben.
Das Stecken läuft dabei wie folgt ab:
Das Handling bewegt den Greifer mit dem durch die Greifelemente 33 gegriffenen Stecker 10 zunächst in eine Ausrichtposition vor das Stecker-Gegenelement, in welcher der Stecker 10 dieses noch nicht kontaktiert, die Ausrichtelemente 34 jedoch bereits seitlich des Stecker-Gegenelements 15 angeordnet sind. Dies erfolgt auf Grundlage einer vorgegebenen, auf Grundlage der vorgesehenen Position des Stecker-Gegenelement 15 bestimmten Position des Endelementes der Handling-Einheit. Ist die Ausgleichseinheit schaltbar, erfolgt dies bevorzugt bei starr geschalteter Ausgleichseinheit.

Die darauffolgende Ausrichtung des Greifers erfolgt bei freigeschalter Ausgleichseinheit. Die Ausrichtelemente 34 zentrieren hierdurch den Greifer mit dem Stecker 10 in der richtigen Position über dem Stecker-Gegenelement 15.

Die Handling-Einheit 20 bewegt nun den Stecker 10 in das Stecker-Gegenelement 15, so dass der Stecker mit diesem in Eingriff kommt.

Nun werden die Greifelemente 33 geöffnet. Der Steckaktor 35 drückt Stecker 10 auf Endanschlag. Der Stecker befindet sich nun ein der finalen Steckposition.

Im Ausführungsbeispiel umfasst der Greifer weiterhin eine Verriegelungvorrichtung zum Verriegeln des Verriegelungselementes 13 des Steckers, sobald sich dieser in der finalen gesteckten Position befindet.

Hierfür ist ein Kontaktelement 38 vorgesehen, welches gegen das Verriegelungselement 13 verfahren wird. Im Ausführungsbeispiel bewegt das Kontaktelement 38 das Verriegelungselement 13 in Steckrichtung.

Zum Bewegen des Kontaktelements 38 ist ein Verriegelungsaktor 35 vorgesehen, über welchen das Kontaktelement 38 an dem Grundkörper 39 des Greifers angeordnet ist. Das Kontaktelement kann daher unabhängig von den Greifelementen 33, den Ausrichtelementen 34 und dem Schubelement 37 bewegt werden.

Bei dem Verriegelungsaktor 35 handelt es sich im Ausführungsbeispiel um einen Linearaktor, bspw. um einen Pneumatikzylinder.

Der Verriegelungsaktor betätigt dabei das Verriegelungselement, insbesondere den Verriegelungs-Pin des Steckers, nachdem dieser sich in der finalen gesteckten Position befindet.

Damit ist der Steckvorgang abgeschlossen.

Bei dem in Fig. 4 bis 6 gezeigten Ausführungsbeispiel erfolgt die Ausrichtung des Greifers über eine Kamera 41, welche am Greifer angeordnet ist und über welche die tatsächliche Position des Stecker-Gegenelementes 15 erfasst wird, und eine entsprechende Positionskorrektur durch die Handling-Einheit 20.

Die Positionserfassung erfolgt im Ausführungsbeispiel über eine Bilderkennung. Die Positionserfassung kann in alternativen Ausgestaltungen jedoch auch über komplexere kamerabasierte Sensoren erfolgen, durch welche die tatsächliche Position des Stecker-Gegenelementes 15 zweidimensional oder dreidimensional erfasst wird, beispielsweise einen Laser-Scanner.

Im Ausführungsbeispiel ist die Kamera 41 neben dem Grundkörper 39 des Greifers angeordnet und gegenüber den Greifelementen 33 zurückversetzt. Die optische Achse der Kamera 41 ist im Ausführungsbeispiel parallel zur Steckrichtung des Steckers bzw. der Bewegungsachse des Steckaktors 36 ausgerichtet.

Die Kamera ist im Ausführungsbeispiel an dem Montageelement 31 befestigt, an welchem auch die Ausgleichseinheit 32 befestigt ist, und steht mit der Handling-Einheit daher ohne die Zwischenschaltung der Ausgleichseinheit 32 in Verbindung.

Die Bestimmung der tatsächlichen Position des Stecker-Gegenelementes 15 erfolgt, indem die Handling-Einheit die Kamera 41 über das Stecker-Gegenelement 15 fährt. Dies erfolgt auf Grundlage der vorgesehenen Position des Stecker-Gegenelementes 15. Durch Bilderkennung wird die tatsächliche Position des Stecker-Gegenelementes 15 erfasst und der Offset zur vorgesehenen Position bestimmt.

Die Handling-Einheit fährt den Greifer mit dem Stecker 10 nun unter Berücksichtigung des durch die Kamera bestimmten Offsets in eine Steckposition vor dem Stecker-Gegenelement 15. Dann fährt die Handling-Einheit den Stecker 10 in das Stecker-Gegenelement 15, so dass beide in Eingriff miteinander stehen.

Soweit die Ausgleichseinheit schaltbar ist, erfolgt das Anfahren der Steckposition vor dem Stecker-Gegenelement 15 mit starr geschalteter Ausgleichseinheit.

Für die Bewegung des Steckers 10 in das Stecker-Gegenelement 15 wird die Ausgleichseinheit dagegen bevorzugt frei geschaltet. Alternativ kann die Ausgleichseinheit auch frei geschaltet werden, nachdem der Stecker über die Handling-Einheit mit dem Stecker-Gegenelement 15 in Eingriff gebracht worden ist.

Nunmehr wir der Steckaktor angesteuert, um den Stecker auf den Endanschlag zu drücken. Dies erfolgt mit frei geschalteter Ausgleichseinheit.

Auch bei dem in Fig. 4 bis 6 gezeigten zweiten Ausführungsbeispiel erfolgt das Drücken des Steckers in seine finale gesteckte Position nicht über die Greifelemente 33, sondern über ein Schubelement 37. Dieses ist ebenfalls zwischen den Greifelementen 33 über dem durch diese gebildeten Aufnahmebereich für den Stecker angeordnet und drückt daher auf die Oberseite des Steckers.

Bei dem in Fig. 4 bis 6 gezeigten zweiten Ausführungsbeispiel sind die Greifelemente und das Schubelement 37 jedoch beide an einem Basiselement 46 angeordnet, welches über den Steckaktor 36 gegenüber dem Grundkörper 30 des Greifers in Steckrichtung bewegbar ist.

Der Steckaktor 36 ist an einem Grundkörper 39 des Greifers angeordnet, welcher über die Ausgleichseinheit 32 mit dem Endglied der Handling-Einheit in Verbindung steht. Weiterhin sind Stangen 42 vorgesehen, über welche das Basiselement 46 gegenüber dem Grundkörper 39 in axialer Richtung des Steckaktors 36 geführt ist.

Bei dem zweiten Ausführungsbeispiel bewegen sich die Greifelemente 33 daher mit dem Schubelement 37 mit, während das Schubelement 37 den Stecker in seine finale gesteckte Position schiebt. Sie greifen den Stecker 10 während dieser Schubbewegung jedoch nicht mehr, so dass keine Spannungen vom Greifer 40 auf den Stecker 10 übertragen werden.

Auch das zweite Ausführungsbeispiel des Greifers hat eine Verriegelungs-Vorrichtung zum Verriegeln des Verriegelungs-Elementes 13 des Steckers 10. Dabei ist ein Kontaktelement 38 vorgesehen, welches durch einen Aktor des Greifers auf das Verriegelungs-Element 13 drückt, um dieses zu betätigen.

Beim zweiten Ausführungsbeispiel wird das Kontaktelement 38 über den Steckaktor 36 betätigt und ist hierfür an dem Basiselement 46 angeordnet.

Um eine weitere Bewegung des Basiselementes 46 mit dem Kontaktelement 38 zu erlauben, nachdem das Schubelement 37 den Stecker in seine finale gesteckte Position geschoben hat, ist das Schubelement 37 beweglich an dem Basiselement 46 angeordnet. Das Schubelement 37 ist über Federn 44 gegenüber dem Basiselement 46 in Steckrichtung vorgespannt. Die Vorspannung der Federn 44 ist größer als die Steckkraft, welche zum Stecken des Steckers in seine finale gesteckte Stellung notwendig ist. Nachdem der Stecker gegen den Endanschlag geschoben wurde, kann sich das Basiselement 46 jedoch gegen die Kraft der Federn 44 dem Schubelement 37 nähern, und so mit dem Kontaktelement 38 das Verriegelungs-Element betätigen.

Wird das Basiselement 46 gegen die Kraft der Federn 44 auf das Schubelement 37 und den Stecker zubewegt, bewegen sich die Greifelemente 33, welche in axialer Richtung starr am Basiselement 46 angeordnet sind, mit diesem in Steckrichtung beziehungsweise axialer Richtung weiter.

Die Greifelemente 33 sind mit einer Hinterschneidung 43 ausgestattet, welche die Oberkante des Steckers umgreift, und bei einem Greifen des Steckers damit ein Herausfallen des Steckers aus dem Greifer verhindert. Der Stecker kann jedoch innerhalb der Greifelemente 33 nach oben gegen die Vorspannung der Federn 44 bewegt werden, wobei sich die von den Hinterschneidungen 43 umgriffene Oberkante in einer Aussparung in den inneren Seitenwänden der Greifelemente nach oben bewegt.

Im Ausführungsbeispiel ist das Schubelement 37 als eine längliche Platte ausgeführt, welche über zwei Stangen 43 in Aussparungen 45 des Basiselementes 46 geführt ist, wobei die Federn 44 die Stangen 43 umgeben und das Schubelement 37 gegenüber dem Basiselement 46 vorspannen.

Weiterhin ist am Basiselement 46 ein Sensor 48 angeordnet, welcher erkennt, wenn das Basiselement 46 in eine Position bewegt wurde, in welcher das Kontaktelement betätigt wurde. Im Ausführungsbeispiel ist der Sensor 48 am Basiskörper 46 in einem Vorsprung 47 montiert und als Näherungssensor ausgeführt, welcher eine Annäherung des Schubelementes 47 an die Unterseite des Sensors 48 erkennt.

Das Kontaktelement 38 ist am Basiselement 46 in Steckrichtung beweglich angeordnet und über eine Feder in Steckrichtung vorgespannt. Die Vorspannung der Feder ist dabei größer als die zum Betätigen des Verriegelungs-Elementes benötigte Kraft. Ist das Verriegelungs-Element betätigt, schützt die bewegliche Lagerung des Kontaktelementes das Verriegelungselement vor Beschädigungen, wenn das Basiselement 46 weiter auf den Stecker zubewegt wird.

Die bisher beschriebenen Greifer dienen dem Greifen eines Steckers, um diesen mit einem Stecker-Gegenelement zu verbinden.

Gemäß einem weiteren unabhängigen Aspekt der vorliegenden Erfindung umfasst die erfindungsgemäße Vorrichtung neben einem ersten Greifer zum Greifen eines Steckers einen zweiten Greifer, welcher zum Greifen des Kabels oder eines zweiten, am anderen Ende des Kabels angeordneten Steckers eingesetzt wird. Wird der zweite Greifer zum Greifen des anderen Steckers eingesetzt, können mit der erfindungsgemäßen Vorrichtung Kabel, an deren beiden Enden Stecker angeordnet sind, mit entsprechenden Stecker-Gegenelementen verbunden werden. Wird der zweite Greifer zum Greifen des Kabels eingesetzt, ermöglicht die vorliegende Erfindung eine Positionierung des Kabels gemäß einem gewünschten Verlauf des Kabels. Dies ist insbesondere beim Montieren längerer Kabel von Vorteil, da die biegeschlaffe Ausgestaltung der Kabel eine Positionierung längerer Kabel allein durch eine Positionierung der Stecker schwierig macht.

Der erste und der zweite Greifer können jeweils an einer ersten und einer zweiten Handling-Einheit mit mehreren Bewegungsachsen angeordnet sein, um zumindest teilweise unabhängig voneinander bewegt zu werden.

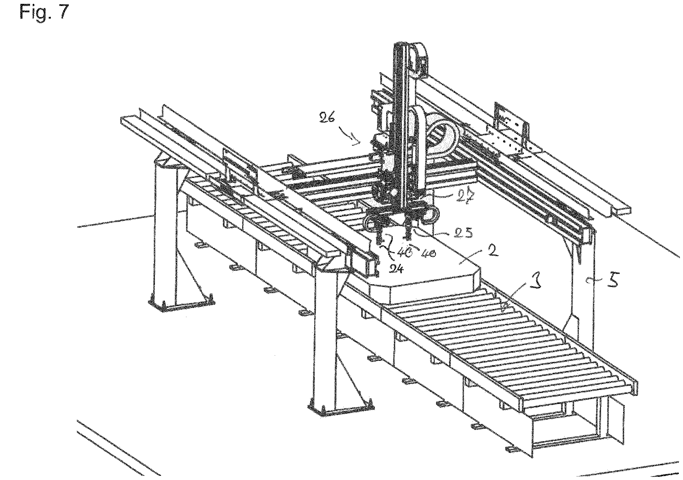

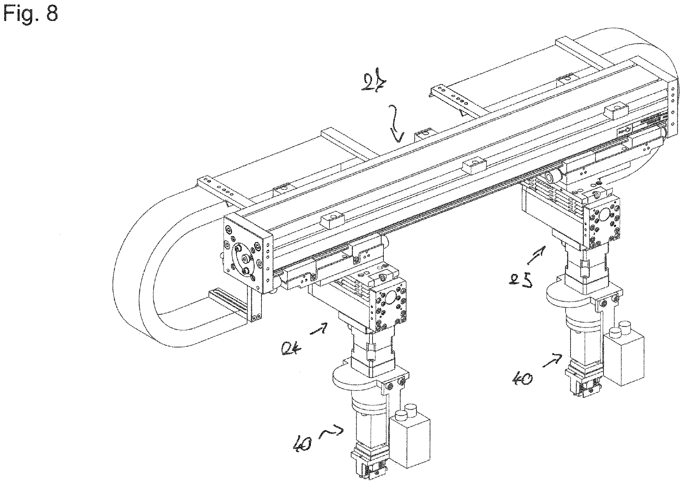

Figuren 7 und 8 zeigen ein zweites Ausführungsbeispiel einer erfindungsgemäßen Vorrichtung mit zwei Greifern 40, wobei die beiden Greifer jeweils über separate Handling-Einheiten 24, 25 bewegbar sind, wobei diese Handling-Einheiten jedoch wiederum an einem gemeinsamen Tragelement angeordnet sind, welches über eine dritte Handling-Einheit 26 bewegbar ist.

Der Bewegungsraum der Handling-Einheiten 24 und 25 ist kleiner als jener der dritten Handling-Einheit 26. Die Handling-Einheit 26 dient der Grob-Positionierung des über die beiden Greifer 40 gebildeten Doppel-Greifers. Die beiden Handling-Einheiten 24 und 25 dienen dagegen der Fein-Positionierung der Greifer, insbesondere der Positionierung von in den beiden Greifern aufgenommenen Steckern gegenüber den entsprechenden Stecker-Gegenelementen.

Im Ausführungsbeispiel sind die beiden Handling-Einheiten 24 und 25 als Mini-Flächenportale ausgebildet, wobei das Tragelement 27 eine Bewegungsschiene darstellt, an welcher ein Schlitten der jeweiligen Handling-Einheit verfahrbar ist. Ein weiterer Schlitten der jeweiligen Handling-Einheiten bilde eine weitere, hierzu senkrecht verlaufende Achse.

Eine weitere Achse der Handling-Einheiten 24 und 25 in Steckrichtung ist nicht notwendig, da wenn notwendig der Steckaktor des jeweiligen Greifers einen Positionsausgleich in Steckrichtung vornehmen kann.

Bei der dritten Handling-Einheit 26 handelt es sich um ein Raumportal, welches über eine Tragvorrichtung 5 oberhalb einer Transportstraße 3 angeordnet ist, auf welcher die Tragvorrichtung 2 für die Batteriemodule zu der erfindungsgemäßen Vorrichtung transportiert wird.

Bei dem in Figuren 7 und 8 gezeigten Ausführungsbeispiel handelt es sich bei den beiden Greifern 40 jeweils um Greifer gemäß dem zweiten Ausführungsbeispiel der vorliegenden Erfindung. In gleicher Weise könnten jedoch auch Greifer gemäß dem ersten Ausführungsbeispiel eingesetzt werden.

Die in Figuren 7 und 8 gezeigte Vorrichtung kann insbesondere zum Stecken kurzer Kabel eingesetzt werden, bei welchen eine Unterstützung des Kabels nicht notwendig ist, sondern die Positionierung des Kabels durch die entsprechende Positionierung der Stecker vorgenommen werden kann.

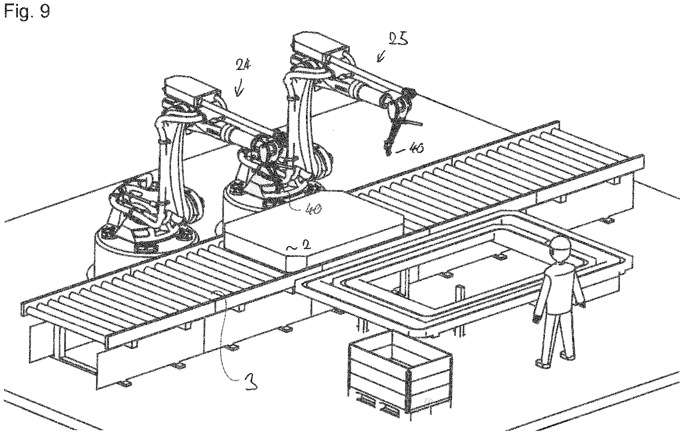

Bei dem in Figur 9 gezeigten dritten Ausführungsbeispiel einer erfindungsgemäßen Vorrichtung sind ebenfalls zwei Greifer 40 zum Greifen von Steckern an Handling-Einheiten 24 und 25 angeordnet. Die Handling-Einheiten 24 und 25 sind jedoch komplett separat ausgeführt und an einer starren Traganordnung angeordnet.

Im Ausführungsbeispiel handelt es sich bei den beiden Handling-Einheiten um Mehr-Achs-Roboter mit rotatorischen Achsen, insbesondere um 6-Achs-Industrieroboter. Diese erlauben es, die beiden Greifer jeweils unabhängig voneinander zu bewegen.

Im Ausführungsbeispiel sind die Greifer über eine Greifarm-Verlängerung an dem jeweiligen Endelement der Handling-Einheit 24, 25 angeordnet, um eine Kollision der Handling-Einheiten zu vermeiden.

Auch dieses Ausführungsbeispiel dient bevorzugt dem Stecken kurzer Kabel, bei welchen das Kabel selbst nicht unterstützt oder gegriffen werden müsste.

Auch hier könnten an Stelle eines Greifers gemäß dem zweiten Ausführungsbeispiel auch ein Greifer gemäß dem ersten Ausführungsbeispiel eingesetzt werden.

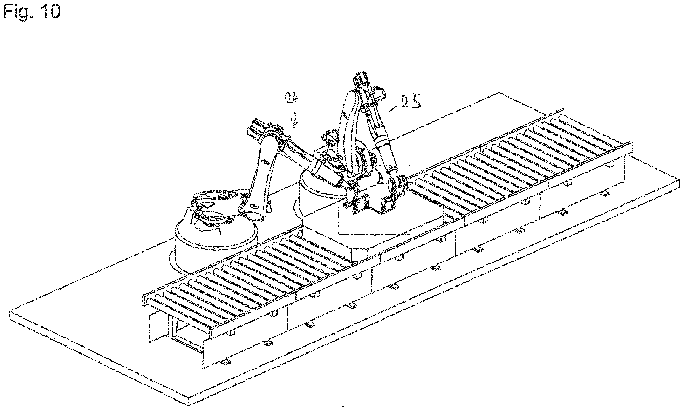

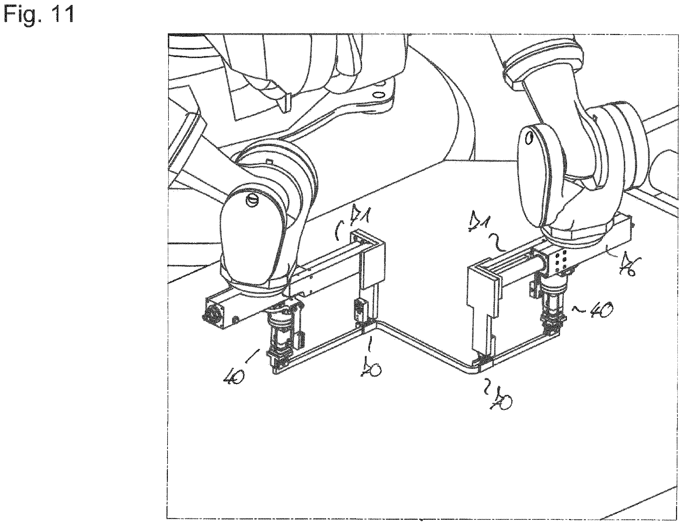

In Figuren 10 und 11 ist ein viertes Ausführungsbeispiel einer erfindungsgemäßen Vorrichtung gezeigt, welches neben einem Greifer 40 zum Greifen des Steckers auch einen Greifer 70 zum Greifen des Kabels umfasst. Im Ausführungsbeispiel sind dabei zwei Greifer 40 zum Greifen der an den beiden Enden eines Kabels angeordneten Stecker vorgesehen, sowie im Ausführungsbeispiel auch zwei Greifer 70 zum Greifen des Kabels. Je nach Ausgestaltung könnte jedoch auch nur ein solcher Greifer 70 zum Greifen des Kabels und/oder nur einer Greifer 40 zum Greifen eines Steckers eingesetzt werden.

Durch den zusätzlichen Greifer 70 zum Greifen des Kabels können auch längere Kabel positioniert werden, oder nicht-lineare Kabelführungen verwirklicht werden.

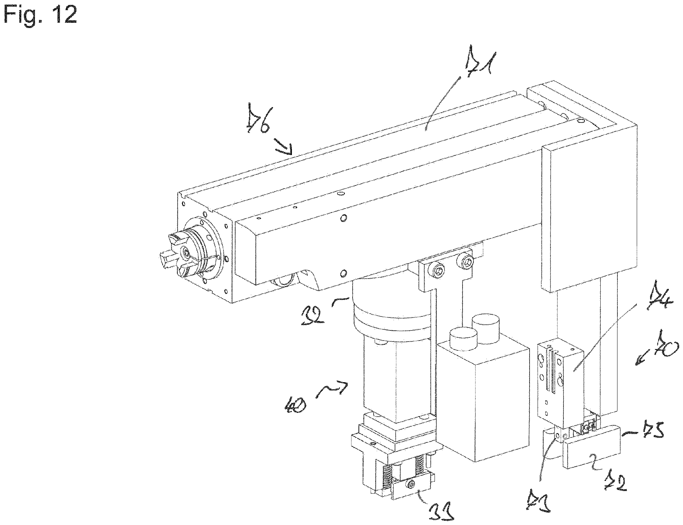

Bei dem in Figuren 10 und 11 gezeigten Ausführungsbeispiel kommt ein Kombi-Biegegreifer zum Einsatz, wie er in Figur 12 gezeigt ist. Hierbei ist ein Greifer 70 zum Greifen des Kabels mit einem Greifer 40 zum Greifen des Steckers kombiniert, wobei die beiden Greifer an einer gemeinsamen Handling-Einheit 24, 25 angeordnet sind.

Bei dem Ausführungsbeispiel handelt es sich bei den Handling-Einheiten 24, 25 um Mehr-Achs-Roboter mit rotatorischen Achsen, insbesondere um 6-Achs-Industrieroboter. Alternativ könnten hier jedoch auch Flächenportale eingesetzt werden, oder eine Lösung, wie sie in Figur 7 und 8 gezeigt ist.

Weiterhin wird im Ausführungsbeispiel als Greifer 40 zum Greifen des Steckers ein Greifer gemäß dem zweiten Ausführungsbeispiel der vorliegenden Erfindung eingesetzt. Alternativ könnte jedoch auch ein anderer Greifer, beispielsweise ein Greifer gemäß dem ersten Ausführungsbeispiel, eingesetzt werden.

Bei dem Greifer 70 zum Greifen des Kabels handelt es sich einen mechanischen Greifer mit zwei Greiffingern beziehungsweise Greifbacken 72, welche über einen Aktor aufeinander zubewegt werden können, um das Kabel zwischen sich aufzunehmen und mechanisch zu halten.

Der Greifer 70 ist so mit dem Greifer 40 kombiniert, dass das Kabel in gerader Richtung von dem Stecker weg zu dem Greifer 70 geführt ist, wenn Stecker und Kabel von den jeweiligen Greifern gegriffen werden. Insbesondere verlaufen die jeweiligen Greifbacken 33, 72 der Greifer 40, 70 parallel, und die jeweiligen Bewegungsachsen der Aktoren zum Bewegen der Greifelemente verlaufen ebenfalls parallel.

Im Ausführungsbeispiel steht der Greifer 70 zum Greifen des Kabels über eine Linearachse 71 mit dem Greifer 40 zum Greifen des Steckers in Verbindung. Über diese Linearachse kann die Entfernung, in welcher der Greifer 70 das Kabel vom Stecker greift, eingestellt werden.

Der Greifer 70 hat die Aufgabe, das vorgeformte Kabel zu stabilisieren, insbesondere dieses am Durchhängen zu hindern und in Form zu halten, und/oder das Kabel, ist dieses nicht vorgeformt, an einem definierten Punkt zu knicken.

Wie in Figur 11 zu erkennen, wird der Greifer 70 im Ausführungsbeispiel zum Biegen des Kabels eingesetzt.

Die Vorderkante 75 der Greifbacken 72 des Greifers 70 weist hierfür einen Krümmungsradius auf, um welchen herum das Kabel geknickt werden kann.

Die Greiferbacken 72 sind bevorzugt entweder relativ breit ausgeführt, um das Biegemoment des Kabels vom Stecker 10 fernzuhalten, oder es werden zwei Greifer 70, welche hintereinander am Kabel angreifen, eingesetzt. Die Greiferbacken 72 können bevorzugt eine Länge von mehr als zwei Zentimetern, insbesondere von mehr als fünf Zentimetern aufweisen.

Der erste Greifer 40 ist im Ausführungsbeispiel an einem Tragelement 76, welches die Linearachse 71, an welcher der Greifer 70 angeordnet ist, beinhaltet, angeordnet. Das Tragelement 76, an welchem die beiden Greifer befestigt sind, ist seinerseits an dem Endglied der Handling-Einheit angeordnet.

An dem Greifer 70 zum Greifen des Kabels ist ein zusätzlicher Aktor 74 angeordnet, welcher über ein Kontaktelement 73 auf das Kabel drücken kann, um dieses beispielsweise in einen Clip oder Kabelkanal zu drücken. Die Achse des Aktors bzw. die Bewegungsachse des Kontaktelementes 73 verläuft bevorzugt senkrecht zum Verlauf des Kabels durch den Greifer und senkrecht zu der Schließrichtung der Greifelemente 72, und/oder parallel zur Steckrichtung zum Stecken des Steckers.

Die in Figuren 10 und 11 gezeigte Vorrichtung kann auch zum Stecken von Kabeln mit nur einem Knick oder ohne Knick eingesetzt werden. Die zusätzlichen Greifer 70 dienen in diesem Fall zumindest auch dem Stabilisieren des Kabels.

In alternativen Ausgestaltungen wäre es denkbar, einen Kombi-Biegegreifer, wie in Figur 12 gezeigt ist, mit einem normalen Greifer zum Greifen eines Steckers, welcher an der anderen Handling-Einheit angeordnet ist, zu kombinieren.

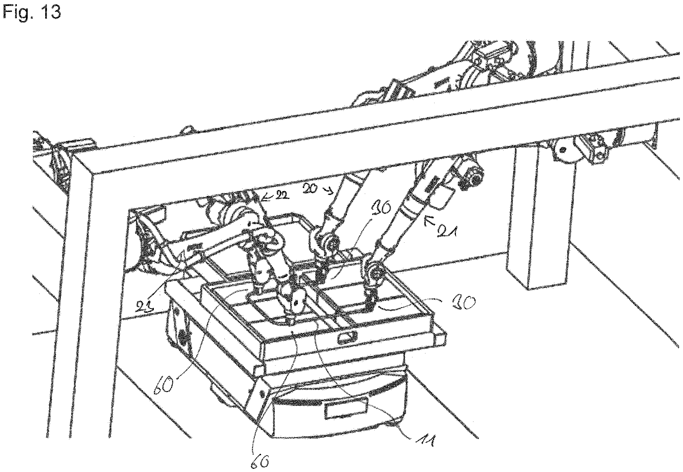

In Figur 13 ist nun noch einmal das erste Ausführungsbeispiel einer erfindungsgemäßen Vorrichtung, welches bereits in Figur 1 dargestellt wurde, in einer vergrößerten Ansicht wiedergegeben.

Bei diesem Ausführungsbeispiel werden neben Greifern 30 zum Greifen der Stecker weiterhin Greifer 60 zum Greifen des Kabels eingesetzt, wobei die Greifer 60 zum Greifen des Kabels an separaten Handling-Einheiten 22 und 23 angeordnet sind. Ebenso sind die Greifer zum Greifen der Stecker an separaten Handling-Einheiten 20 und 21 angeordnet.

Eine solche Ausgestaltung dient insbesondere zum Stecken langer Kabel mit oder ohne Knick, oder wie im Ausführungsbeispiel auch mit zwei Knicken. Durch die beiden Greifer 60 kann das Kabel an einer definierten Position gebogen bzw. auf eine definierte Position verlegt werden. Die zwei separaten Handling-Einheiten übernehmen das Stecken der Stecker an den Kabelenden, und mindestens eine weitere Handling-Einheit das Positionieren bzw. Biegen und Nachführen und Verlegen des Kabels.

Im Ausführungsbeispiel sind die Handling-Einheiten jeweils Mehr-Achs-Roboter mit rotatorischen Achsen, insbesondere 6-Achs-Industrieroboter. Alterativ könnten jedoch auch hier Flächenportale eingesetzt werden.

Weiterhin wäre auch eine Lösung, wie sie in Figuren 7 und 8 gezeigt ist, denkbar.

Beispielsweise können zwei oder mehr der Greifer jeweils über kleinere Handling-Einheiten an einer Trageanordnung angeordnet sein, welche über eine größere Handling-Einheit grob positioniert wird. Insbesondere wäre denkbar, dass sämtliche Greifer über kleinere Handling-Einheiten an einem gemeinsamen Trageelement angeordnet sind, welches über eine größere Handling-Einheit positioniert wird.

Die Greifer 60 können als einfache mechanische Greifer ausgeführt sein. Sie können jedoch auch so ausgestaltet sein wie die Greifer 70, welche mit Bezug auf Figur 12 bereits näher beschrieben wurden. Insbesondere können die Greifer 60 einen zusätzlichen Aktor 74 mit einem Kontaktelement 73 zum Eindrücken des Kabels in eine Aufnahme aufweisen. Werden die Greifer zum Biegen der Kabel eingesetzt, weisen sie bevorzugt Krümmungsradien am entsprechenden Ende der Greiferbacken auf.

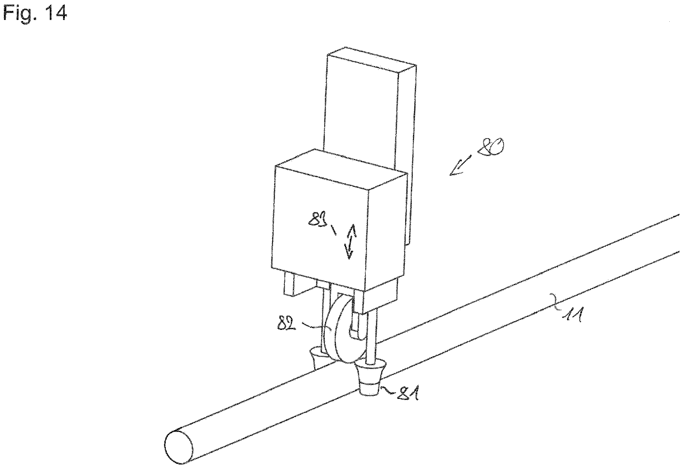

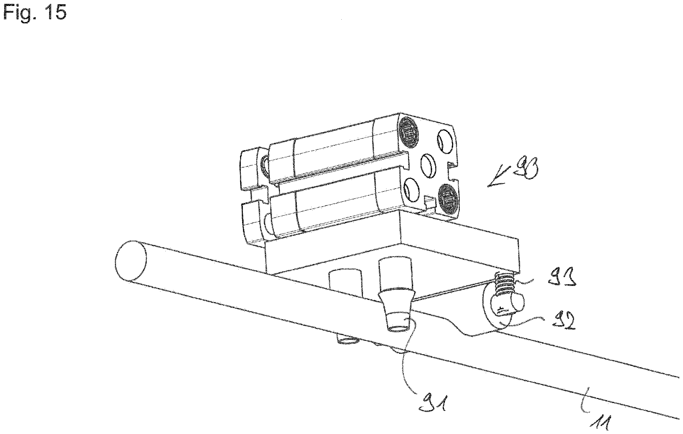

Im Rahmen der vorliegenden Erfindung können weiterhin Kabel-Verlegegreifer eingesetzt werden, wie sie in Figuren 14 und 15 gezeigt sind. Diese sind bevorzugt an einer separaten Handling-Einheit angeordnet, und dienen der Positionierung des Kabels entlang einer gewünschten Bahn. Insbesondere können die Kabel-Verlegegreifer zum Einschieben des Kabels in einen Führungskanal eingesetzt werden.

Der Greifer 80, 90 weist Greifelemente 81, 91 auf, welche als Führungselemente dienen, und an das Kabel 11 angelegt werden. Die Greifelemente 81, 91 sind bevorzugt drehbar gelagert, so dass sie entlang des Kabels abrollen können. Die Form der Greifelemente 81, 92 verjüngt sich bevorzugt nach unten hin, so dass das Kabel aus den Greifelementen nach unten hin herausgedrückt werden kann.

Der Greifer weist weiterhin ein Eindrückelement 82, 92 auf, welches von oben auf das Kabel drückt, um dieses beispielsweise in einen entsprechenden Aufnahmekanal hineinzudrücken.

Bei den in Figur 14 gezeigten Ausführungsbeispiel ist das Eindrückelement auf der Höhe der Greifelemente 81 zwischen diesen angeordnet. Hier ist bevorzugt ein Aktor 83 vorgesehen, über welchen das Eindrückelement 82 zwischen die Greifelemente 81 bewegt werden kann, beispielsweise um das Kabel in eine Clips-Aufnahme einzudrücken.

Bei dem in Figur 15 gezeigten Ausführungsbeispiel ist das Eindrückelement 92 dagegen in Bewegungsrichtung hinter den Greifelementen 91 oberhalb des Kabels montiert, und drückt diese beispielsweise in einen Kabelkanal, nachdem das Kabel die Führungselemente 91 verlassen hat. Das Eindrückelement 92 ist dabei im Ausführungsbeispiel in Figur 15 über Federn 93 federnd am Greifer gelagert.

In beiden Ausführungsbeispielen sind die Eindrückelemente 81, 92 drehend gelagert, und rollen dabei auf dem Kabel ab. Im Ausführungsbeispiel in Figur 14 handelt es sich bei dem Eindrückelement 82 um eine schmale Rolle, bei dem Ausführungsbeispiel in Figur 15 um eine Walze, welche breiter ist als das Kabel.

Die in Figuren 14 und 15 gezeigten Kabel-Verlegegreifer werden über die Handling-Einheit, an welcher sie angeordnet sind, entlang des Kabels verfahren, um das Kabel entlang einer gewünschten Bahn auszurichten und/oder in entsprechende Aufnahmen einzudrücken.

Bevorzugt werden die Kabel-Verlegegreifer entlang des Kabels verfahren, nachdem durch andere Greifer die Stecker an den Kabelenden mit den entsprechenden Stecker-Gegenelementen verbunden wurden.

In der möglichen Ausgestaltung der vorliegenden Erfindung werden die Kabel-Verlegegreifer mit Kombi-Greifern, wie sie in Figur 12 gezeigt sind, kombiniert, wobei die zusätzlichen am Kabel angreifenden Greifer 70 Belastungen vom Stecker fernhalten, welche durch die Anwendung der Kabel-Verlegegreifer ansonsten auf die Stecker wirken würden.

Das Verfahren der Verlegegreifer entlang des Kabels erfolgt bevorzugt entlang eines vorbestimmten, in der Steuerung abgelegten Wegs. In einer möglichen Ausgestaltung kann am Verlegegreifer weiterhin eine Kamera angeordnet sein, durch welche die Aufnahme erfasst wird, in welche das Kabel eingedrückt werden soll, um eine Positionskorrektur vorzunehmen.

Die Kabel-Verlegegreifer können mit allen oben beschriebenen erfindungsgemäßen Vorrichtungen kombiniert werden.

## Patentansprüche

1. Vorrichtung zum automatisierten Herstellen einer Steckverbindung eines an einem Kabel angeordneten Steckers mit einem Stecker-Gegenelement, insbesondere zur Verkabelung von Batterie-Modulen, insbesondere bei der Herstellung von Fahrzeugen mit Hybrid- und/oder Elektroantrieb, umfassend:
einen Greifer zum Greifen des Steckers,
eine Handling-Einheit mit mehreren Achsen zum Bewegen des Greifers, wobei es sich insbesondere um einen Mehr-Achs-Roboter und/oder ein Flächenportal handelt, und
eine Steuerung zur Ansteuerung des Greifers und der Handling-Einheit,
**dadurch gekennzeichnet,**
**dass** der Greifer einen Steckaktor zum Bewegen des Steckers in eine gesteckte Position mit dem Stecker-Gegenelement umfasst.

2. Vorrichtung nach Anspruch 1, wobei es sich bei dem Steckaktor um einen Linearaktor handelt.

3. Vorrichtung nach einem der vorangegangenen Ansprüche, wobei es sich bei dem Greifer um einen mechanischen Greifer zum Greifen des Steckers handelt, welcher bevorzugt mindestens zwei über einen Aktor relativ zueinander bewegbare mechanische Greifelemente, insbesondere Greifbacken und/oder Greiffinger, umfasst, wobei bevorzugt die Bewegungsachse des Steckaktors senkrecht auf der Bewegungsachse der Greifelemente steht.

4. Vorrichtung nach einem der vorangegangenen Ansprüche, wobei der Steckaktor den Stecker zum Bewegen in die finale Steckposition über ein Schubelement bewegt, wobei die Steuerung bevorzugt so ausgeführt ist, dass sie den Greifer so angesteuert wird, dass er den Griff des Greifers lockert oder löst, bevor der Steckaktor den Stecker mittels des Schubelements in die finale Steckposition bewegt.

5. Vorrichtung nach einem der vorangegangenen Ansprüche, wobei die Steuerung bevorzugt ausgeführt ist, dass sie die Handling-Einheit ansteuert, um den Stecker in eine Eingriffsposition mit dem Stecker-Gegenelement zu bewegen, und den Steckaktor ansteuert, um bei stehender Handling-Einheit den Stecker in eine finale Steckposition mit dem Stecker-Gegenelement zu bewegen.

6. Vorrichtung nach einem der vorangegangenen Ansprüche, wobei der Greifer über eine Ausgleichseinheit an der Handling-Einheit angeordnet ist, wobei die Ausgleichseinheit in zumindest einem Betriebszustand eine Ausgleichbewegung des Greifers gegenüber der Handling-Einheit erlaubt.

7. Vorrichtung nach Anspruch 6, wobei die Ausgleichseinheit von einem ersten Betriebszustand, in welchem die Ausgleichseinheit eine Ausgleichbewegung des Greifers gegenüber der Handling-Einheit erlaubt, in einen zweiten Betriebszustand schaltbar ist, in welchem der Greifer starr an der Handling-Einheit angeordnet ist.

8. Vorrichtung nach einem der vorangegangenen Ansprüche, wobei der Greifer eine Verriegelungs-Vorrichtung zum Verriegeln eines Verriegelungselementes des Steckers und/oder des Stecker-Gegenelements umfasst, wobei die Verriegelungs-Vorrichtung bevorzugt ein Kontaktelement zum Kontaktieren des Verriegelungselementes in einer gesteckten Position des Steckers und bevorzugt einen Aktor zum Bewegen des Kontaktelementes relativ zum Stecker umfasst.

9. Vorrichtung nach Anspruch 8, wobei der Steckaktor zum Bewegen des Kontaktelementes relativ zum Stecker genutzt wird, wobei bevorzugt ein Schubelement zum Bewegen des Steckers beweglich und insbesondere federnd mit dem Steckaktor in Verbindung steht und daher nach dem Bewegen des Steckers in die gesteckte Position eine weitere Bewegung des Steckaktors erlaubt, durch welche das Kontaktelement gegen das Verriegelungselement bewegt wird, wobei das Kontaktelement bevorzugt beweglich mit dem Steckaktor in Verbindung steht und/oder wobei die Endposition des Steckaktors über einen Sensor erkannt wird.

10. Vorrichtung nach einem der vorangegangenen Ansprüche, wobei der Greifer mindestens ein Ausrichtelement aufweist, welches mit dem Stecker-Gegenelement in Anlage gebracht werden kann, um den Stecker zu dem Stecker-Gegenelement auszurichten, wobei bevorzugt das Ausrichtelement und der mittels des Greifelements gehaltene Stecker mittels eines Aktor des Greifers relativ zueinander bewegbar sind, um den Stecker zu dem Stecker-Gegenelement auszurichten, und/oder wobei bevorzugt das Ausrichtelement durch einen Aktor bewegbar am Greifer angeordnet ist und diesen relativ zur Handling-Einheit bewegt, wobei bevorzugt eine zwischen Greifer und Handling-Einheit angeordnete Ausgleichseinheit ausgelenkt wird.

11. Vorrichtung nach Anspruch 10, mit mindestens zwei Ausrichtelementen, welche das Stecker-Gegenelement auf gegenüberliegenden Seiten umfassen und über den mindestens einen Aktor aufeinander zu verfahrbar sind, um den Stecker gegenüber dem Stecker-Gegenelement auszurichten, wobei das Ausrichten des Steckers bevorzugt durch Ausrichten des Greifers erfolgt, und/oder wobei die Ausrichtelemente das Stecker-Gegenelement bevorzugt greifen, und/oder wobei die Steuerung so ausgestaltet ist, dass der Stecker in eine Eingriffsposition mit dem Stecker-Gegenelement gebracht wird, während das mindestens eine Ausrichtelement in Kontakt mit dem Stecker-Gegenelement ist und bevorzugt die Ausrichtelemente das Stecker-Gegenelement greifen, wobei bevorzugt auch die Bewegung des Steckers in die finale Steckposition erfolgt, während das mindestens eine Ausrichtelement in Kontakt mit dem Stecker-Gegenelement ist und bevorzugt die Ausrichtelemente das Stecker-Gegenelement greifen.

12. Vorrichtung nach einem der vorangegangenen Ansprüche, mit einer Kamera zur Erfassung der Position des Stecker-Gegenelements, wobei die Steuerung bevorzugt so ausgestaltet ist, dass der am Greifer aufgenommene Stecker auf Grundlage der erfassten Position in eine Einstreckposition vor das Stecker-Gegenelement verfahren wird, wobei die Kamera bevorzugt am Greifer angeordnet ist, wobei die Steuerung bevorzugt so ausgestaltet ist, dass die Kamera zunächst in eine Messposition vor das Stecker-Gegenelement verfahren wird, um die Position des Stecker-Gegenelementes zu erfassen, und daraufhin durch Umpositionieren des Greifers der am Greifer aufgenommene Stecker in die Einstreckposition verfahren wird.

13. Vorrichtung nach Anspruch 12, wobei die Erfassung der Position des Stecker-Gegenelements und/oder das Verfahren des Steckers in die Einsteckposition mit einem starr geschalteten Ausgleichselement erfolgt und das Bewegen des Steckers in die gesteckte Position mittels des Steckaktors mit einer nachgiebig geschalteten Ausgleichseinheit erfolgt.

14. Greifer für eine Vorrichtung nach einem der vorangegangenen Ansprüche.

15. Verfahren zum automatisierten Herstellen einer Steckverbindung eines an einem Kabel angeordneten Steckers mit einem Stecker-Gegenelement, insbesondere zur Verkabelung von Batterie-Modulen, insbesondere bei der Herstellung von Fahrzeugen mit Hybrid- und/oder Elektroantrieb, mit einer Vorrichtung nach einem der vorangegangenen Ansprüche, wobei der Stecker durch den Steckaktor in eine gesteckte Position mit dem Stecker-Gegenelement bewegt wird.
